# NEUE EUROPÄISCHE PATENTSCHRIFT

(11) **EP 2 446 748 B2**
(45) Veröffentlichungstag und Bekanntmachung des Hinweises auf die Entscheidung über den Einspruch: **23.11.2016**
(45) Hinweis auf die Patenterteilung: 01.05.2013
(21) Anmeldenummer: 11008397.9
(22) Anmeldetag: 19.10.2011
(51) Int. Cl.: A23G 1/00, A23G 1/12

(54) **Verfahren zur Herstellung einer Schokoladenmasse**
Method for producing a chocolate mass
Procédé de fabrication d'une masse de chocolat

(30) Priorität: 28.10.2010 DE 102010049680
(43) Veröffentlichungstag der Anmeldung: 02.05.2012
(73) Patentinhaber: LIPP Mischtechnik GmbH, 68309 Mannheim (DE)
(72) Erfinder: Lipp, Eberhard, 67122 Altrip (DE); Bolenz, Siegfried, 17217 Krukow (DE); Manske, André, 17034 Neubrandenburg (DE)
(74) Vertreter: Petersen, Frank

(56) Entgegenhaltungen:
- WO-A1-2005/077197
- FR-A1- 2 017 696
- MARA LUCISANO ET AL: "Influence of formulation and processing variables on ball mill refining of milk chocolate", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, Bd. 223, Nr. 6, 14. März 2006 (2006-03-14) , Seiten 797-802, XP019441195, ISSN: 1438-2385, DOI: 10.1007/S00217-006-0272-6

## Beschreibung

Die Erfindung betrifft ein Verfahren zur Herstellung einer Schokoladenmasse mit dem Schritt einer Zerkleinerung von Bestandteilen und dem Schritt eines Conchierens.

Bei der bekannten Herstellung von Schokoladenmassen ist es üblich (Kristall-) Zucker, die Kakaomasse, einen Teil der Kakaobutter und das Milchpulver in einem geeigneten Gerät miteinander zu vermischen und dann dieses Gemenge für eine Zerkleinerung der Partikel zu mahlen. In der industriellen Praxis wird bei hochwertigen Schokoladen das Mahlen des Gemenges überwiegend mit Walzenreibmaschinen durchgeführt. Dabei ist es üblich, in einer ersten Zerkleinerungsstufe das Gemenge über ein Zwei-Walzwerk vorzuzerkleinern und das entsprechend vorzerkleinerte Gemenge anschließend auf einem Fünf-Walzwerk auf eine endgültige Feinheit zu bringen.

Diese beschriebenen Walzwerke sind aber recht aufwendig konstruierte, damit komplizierte und auch in der Anschaffung entsprechend teure Maschinen. Au-βerdem können solche Walzwerke als offene Systeme grundsätzlich zu Produktverlusten führen und bringen eventuell auch Hygieneprobleme mit sich. Weiterhin haben diese offenen Systeme den Nachteil, dass die gewalzte Ware Feuchtigkeit aus der Umgebung aufnehmen kann. Schließlich sind derartige offene Systeme grundsätzlich auch mit Sicherheitsproblemen für das Bedienpersonal belastet. Einigen dieser Probleme versucht man durch Einhausungen der Walzwerke zu begegnen, was aber die Maschinen weiter verteuert.

Nach der Feinzerkleinerung der Schokoladenkomponenten verlässt das endzerkleinerte Gemenge bei den bekannten Verfahren das Fünf-Walzwerk als flockiges, rieselfähiges Pulver mit einer Partikelgröße von x90 <15 bis <30 µm, was bedeutet, dass 90 Vol.-% der Partikel kleiner als die genannten Werte sind. Bei dieser Feinheit wird die fertige Schokolade im Mund als zart und mit angenehmem Schmelz empfunden.

Dieses endzerkleinerte Gemenge wird bei den bekannten Verfahren in eine Conche gegeben, wo es - ggf. unter Zugabe von zusätzlichen Geschmacksstoffen und/oder von weiterer Kakaobutter und/oder von Emulgatoren - zu einer fertigen flüssigen Schokoladenmasse verarbeitet wird.

Bei dieser Verarbeitung in der Conche werden unter Temperatursteuerung flüchtige Bestandteile der Produktmasse in Form von Wasser und organischen Säuren mittels durch die Conche geleiteter Gase (insbesondere Luft) entfernt, wobei außerdem noch Reaktionen zwischen den organischen Bestandteilen und den reaktiven Kohlenhydraten der Kakaomasse bzw. der Milch zur Geschmacksentwicklung beitragen.

Nach den bisherigen Erkenntnissen müssen die Temperatur- und sonstigen Arbeitsbedingungen genau gesteuert werden, die für den Prozess der Bearbeitung der Produktmasse in der Conche Voraussetzung sind. Insbesondere die Temperaturführung hat einen erheblichen Einfluss auf die Trocknungsgeschwindigkeit der Produktmasse und auch auf die Geschmacksnote der zu erreichenden Schokolade.

Um die gewünschte Geschmacksqualität zu erhalten, wurde bisher insbesondere eine lange Conchierdauer als vorteilhaft angesehen. Allerdings ist für die Wirtschaftlichkeit der Schokoladenherstellung diese notwendige Conchierzeit von erheblicher Bedeutung: Bei üblicher Vollmilchschokolade wird zwischen 6 und 12 Stunden conchiert und bei dunkler Schokolade zwischen 8 und 16 Stunden.

Um den Aufwand bei der Herstellung von Schokolade erheblich reduzieren zu können, wird in der WO 2005/077 197 vorgeschlagen, dass der Schritt der Zerkleinerung dem Schritt des Conchierens nachgeschaltet ist.

Der entscheidende Vorgang beim Conchieren ist das Entfernen von Anteilen unerwünschter flüchtiger Stoffe der Kakaomasse und der Kakaobutter, sowie Wasser und Essigsäure etc.

Überraschend hat sich herausgestellt, dass dieses Ziel auch erreicht wird, wenn das Conchieren nicht mit fein zerkleinertem Material durchgeführt wird. Vielmehr kann die Zerkleinerung auf die aus oben genannten Gründen gewünschte Partikelgröße von x90 <15 bis <30 µm nach dem Conchieren durchgeführt werden.

Dabei wird dem eigentlichen Conchieren eine Grobzerkleinerung vorgeschaltet und die oben angesprochene Zerkleinerung nach dem Conchieren ist eine Feinzerkleinerung.

Unter einer Grobzerkleinerung wird im Rahmen dieser Erfindung insbesondere verstanden, dass die übliche Partikelgröße etwa in dem Bereich von 300 - 400 µm liegt. Diese Partikelgröße ist mit geringerem apparativem und zeitlichem Aufwand erreichbar. Hierbei ist allerdings zu berücksichtigen, dass nur die zu Beginn des Verfahrens zugeführte Menge an Kristallzucker normalerweise eine größere Korngröße aufweisen, während Milchpulver und Kakaomasse sowie ggf. zugesetztes Fett grundsätzlich als bereits die abschließende Feinheit aufweisend angesehen werden können.

Von einer Feinzerkleinerung wird dann gesprochen, wenn die oben diskutierte Partikelgröße x90 <15 bis <30 µm erreicht wird.

Unter diesem Aspekt wird vorgeschlagen, zu Beginn des hier beschriebenen Verfahrens Kristallzucker, Milchpulver sowie ggf. weitere laktosehaltige Milchbestandteile wie Laktose, Molkenpulver etc. - die im Rahmen der hier vorliegenden Erfindung der Einfachheit halber zusammengefasst als "Milchpulver" bezeichnet werden sollen - und Fett oder Kakaomasse einer entsprechenden Grobzerkleinerung zu unterziehen, wobei die Grobzerkleinerung bei einem Fettanteil von nur etwa 1 - 4 % erfolgt. Unter Fett wird üblicherweise Kakaobutter, Butterreinfett oder Pflanzenfett verstanden. Statt solchem Fett kann aber auch eine adäquate Menge an Kakaomasse zugegeben werden.

Ein derartig niedriger Fettanteil hat den Vorteil, dass er ausreichend ist, um eine Staubbildung während der Grobzerkleinerung wirksam zu unterbinden.

Die Unterbindung der Staubbildung ist dabei von erheblicher Bedeutung, da hierdurch sowohl eine gesundheitliche. Belastung von Mitarbeitern durch auftretende Stäube vermieden wird und auch eine bei Auftreten von Staub gegebene Explosionsgefahr ausgeschlossen werden kann. Des Weiteren hat sich herausgestellt, dass gerade bei einer Grobzerkleinerung dieser Kombination an Bestandteilen in dem nachfolgenden Conchierschritt und dem abschließenden Feinmahlen ein fertiges Produkt erreicht werden konnte, dass am Ende die gewünschte Partikelgröße und rheologischen Eigenschaften aufwies. Erstaunlicherweise konnten solche Werte bei einer Verwendung von unzerkleinertem Zucker nicht erzielt werden

Erfindungsgemäß erfolgt die angesprochene Grobzerkleinerung mit direkt in die Conche integrierten Maschinenelementen. Hierdurch kann ein zeitaufwendiges Umfüllen vermieden werden.

Um bei der an die Grobzerkleinerung insbesondere zu Beginn des Conchierprozesses anschließenden Trocknung gute Ergebnisse zu erzielen, wird bei dem Conchiervorgang ein schneller Anstieg auf Temperaturen von ca. 70 - 80 °C bei Milchschokoladen bzw. etwa 80 - 95 °C bei dunklen Schokoladen, die kaum Milchbestandteile enthalten, vorgeschlagen.

Bei den bisher bekannten Conchierverfahren wird stattdessen eine zunächst relativ niedrige Temperatur von unter 55 °C gehalten, bis die zu conchierende Masse einen gewünschten geringen Restwassergehalt hat. Es ist nämlich bekannt, dass bei zu hohen Temperaturen und noch vorliegendem Wassergehalt es in der zu conchierenden Masse zu harten Agglomeraten kommt.

Der Grund für diese Agglomeratbildung ist der, dass das Milchpulver, das für die Schokoladenherstellung üblicherweise verwandt wird, amorphe Laktose enthalten kann. Diese strebt dazu, in eine stabile Form umzukristallisieren, das so genannte Alpha-Laktose-Monohydrat. Zur Mobilisierung des für diese Kristallisation notwendigen Platzwechsels benötigt das Laktosemolekül aber einen Wasserüberschuss, der zunächst aus der Umgebung aufgenommen wird, z. B. aus der Feuchtigkeit der umgebenden Luft. Daher ist amorphe Laktose stark hygroskopisch. Ein Teil des von der Laktose aufgenommenen Wassers verbleibt zwar letztendlich im gebildeten Kristall, aber ein Überschuss an Wasser wird wieder abgegeben. Durch diesen Überschuss wird wiederum Saccharose angelöst, mit der Agglomerate aus den Feststoffen gebildet werden. Bei Fortschreiten der Trocknung verfestigen sich diese Agglomerate zu harten, grießartigen Partikeln.

Bei den bisher bekannten Conchierverfahren mussten im Fall der Bildung solcher Agglomerate diese abgesiebt werden, was nicht nur zeitaufwendig ist sondern auch einen erheblichen Verlust an Schokoladenmasse darstellt.

Da bei dem hier beschriebenen Verfahren nach dem Conchieren aber noch eine Zerkleinerung, insbesondere ein Feinzerkleinerung vorgenommen wird, bilden im hier beschriebenen Verfahren diese Agglomerate kein Problem. Sie können mit zermahlen werden.

Damit kann also die Verfahrenstemperatur von Anfang an auf die genannten 70 - 80 °C bzw. 80 - 95 °C erhöht werden und muss nicht wie bisher üblich auf niedrigen Temperaturen gehalten werden, bis eine gewünschte Restfeuchte von ca. 0,5 - 0,6 % erreicht ist. Diese genannten hohen Temperaturen können z. B. durch eine externe Beheizung schnell erreicht werden. Es ist aber auch möglich, durch interne Vorgänge Friktionswärme zu erzeugen und diese im Gemenge zu belassen.

Wenn die genannten Temperaturen erreicht sind, kann ein weiterer Temperaturanstieg, der aufgrund des Conchierens und damit einhergehendem weiteren Friktionswärmeeintrag zu erwarten ist, durch ein entsprechendes Kühlen vermieden werden. Dieses Kühlen kann entweder durch das beim Conchieren durch die Conche und damit durch das Gemenge geführte Gas erfolgen oder aber durch eine Mantelkühlung der Conche insbesondere mit Kühlwasser.

Derart hohe Temperaturen haben dabei auf die mit dem Conchieren verfolgten Ziele einen positiven Einfluss. Bei diesen Zielen geht es zum einen um das Entfernen von Wasser, das hauptsächlich über Milchpulver eingebracht wird. Es wurde bereits erläutert, dass vor allem von amorpher Laktose Wasser aufgenommen werden kann, was den Wassergehalt der zu verarbeitenden Masse erhöht, wenn eine Feinzerkleinerung von Schokoladenmasse beispielsweise bei hoher Luftfeuchtigkeit erfolgt. Grundsätzlich hat auch nicht vorbehandelte Kakaomasse einen gewissen Wasseranteil, der beim Conchieren auszutreiben ist.

Des Weiteren wird beim Conchieren das Entfernen von unerwünschten flüchtigen Stoffen angestrebt, die in nicht vorbehandelter Kakaomasse enthalten sind. Hierzu zählt z. B. Essigsäure.

Als letztes werden zwischen Milchproteinen und dem reduzierenden Zucker so genannte Maillardreaktionen während des Conchierens erfolgen, die die geschmackliche Ausbildung der Schokolade beeinflussen.

Alle genannten Ziele des Conchierens sind dabei deutlich temperaturabhängig.

Die Reaktionsgeschwindigkeiten werden nämlich beeinflusst von den Dampfdrücken der flüchtigen Komponenten, den stoffspezifischen Aktivitätskoeffizienten und den Bindungskräften der flüchtigen Komponenten an ihre Träger. Dabei ist insbesondere die Diffusionsgeschwindigkeit der flüchtigen Komponenten aus dem Produktinneren zur Oberfläche geschwindigkeitsbestimmt. All die Parameter sind im Übrigen durch die Bestandteile der Mischung vorgegeben und kaum beeinflussbar.

Allerdings ist bekannt, dass diese Parameter stark von der Temperatur abhängig sind, z. B. ist bei umso höherer Produkttemperatur ein umso höherer Partialdruck der Flüssigkeit an den Partikeloberflächen vorhanden. Auch die Geschwindigkeit der genannten Maillardreaktionen ist temperaturabhängig wobei es eine bekannte Regel ist, dass sich die entsprechende Reaktionsgeschwindigkeit etwa um den Faktor 2 - 4 beschleunigt, wenn sich die Temperatur um ca. 10 °C erhöht. Unter diesen Gesichtspunkten ist die bereits zu Beginn des Conchierprozesses auf das gewünschte Endniveau angehobene Temperatur von Bedeutung.

Vorteilhaft ist dabei auch, dass aufgrund des geringen Fettgehaltes die genannten Prozesse während des Conchierens relativ ungehindert ablaufen können. Allerdings ist hier zu berücksichtigen, dass nach der oben diskutierten Grobzerkleinerung vor dem Conchieren noch dem Conchierprozess (mit) zu unterziehende Kakaomasse zugegeben wird, so dass der Fettgehalt der zu conchierenden Masse auf etwa 4 - 16 % vorzugsweise auf etwa 8 - 16 % angehoben wird.

Nach dem Conchieren ist die Masse pumpfähig zu machen, was durch ein weiteres Auffetten auf mindestens 19 % Fett unter Zugabe von Emulgatoren (insbesondere Lecithin) vorgenommen wird. Falls weniger oder kein Emulgator zugegeben wird, kann der Fettgehalt auch deutlich höher liegen.

Für die abschließende Feinzerkleinerung wird insbesondere die Verwendung einer Rührwerkskugelmühle vorgesehen. Während der Feinzerkleinerung in dieser Rührwerkskugelmühle wird der Fettgehalt weiter angehoben, um trotz des zerkleinerungsbedingten Viskositätsanstiegs die Masse weiterhin pumpfähig zu erhalten.

Die Schokoladenmasse, die die Rührwerkskugelmühle verlässt, ist also flüssig und kann zur Homogenisierung des Feingefüges noch über einen nachgeschalteten Hochschermischer geleitet werden. Hier wird dann die Schokoladenmasse auf einen typischen Fettgehalt von 30 - 32 % weiter aufgefettet.

Bei einem wie hier vorgeschlagenen Verfahren ist der niedrige mögliche Fettgehalt der Schokoladenmasse bei einer Verarbeitung in einer Rührwerkskugelmühle überraschend. Normalerweise wird für die Verarbeitung von Schokoladenmasse in einer Rührwerkskugelmühle nämlich ein Fettgehalt von 25 % und höher vorgeschlagen, um innerhalb der Rührwerkskugelmühle eine gut verarbeitbare Konsistenz vorliegen zu haben. Fett, für das aber insbesondere Kakaobutter zu verwenden ist, ist aber auch relativ teuer und man ist auch unter diesem Aspekt bemüht, den Fettgehalt einer Schokolade so niedrig wie möglich zu halten. Dies ist mit dem hier beschriebenen Verfahren problemlos möglich, auch bei einer abschließenden Feinzerkleinerung mittels Rührwerkskugelmühlen.

Werden alternativ zu der Rührwerkskugelmühle für die nach dem Conchieren auf ca. 23 - 26 % Fett weiter aufgefettete Masse Feinwalzenmühlen wie oben beschrieben eingesetzt, wird man ein Pulver erhalten, das dann entweder kontinuierlich, z. B. in einem Inlinemischer oder in parallel arbeitenden Chargenverflüssigern für die weitere Verarbeitung verflüssigt wird. Geeignete Inlinemischer werden von der Anmelderin unter der Bezeichnung "Reflector" kommerziell angeboten.

Abschließend wird die erhaltene Schokoladenmasse zur endgültigen Einstellung von Fett- und Emulgatorgehalt in Rührwerksbehältern eingelagert, aus denen die Masse dann zur Zubereitung von Schokolade entnommen wird. Für die Schokoladenmasse mit einem Endfettgehalt von ca. 30 - 32 % Fett haben sich rheologische Werte nach Casson ergeben wie folgt: Viskosität 1,8 - 2,2 Pas; Fließgrenze 20 - 25 Pa. Diese Werte findet man üblicherweise nur bei hochwertigen Schokoladen, die mit Walzenmühlen hergestellt wurden. Produkte, die mit Rührwerkskugelmühlen hergestellt wurden, hatten bisher immer erheblich schlechtere Werte.

Ein wesentlicher Vorteil des beschriebenen Verfahrens liegt letztendlich auch in einer erheblichen Verkürzung der Conchierzeit. Während bei dem bekannten Verfahren im Hinblick auf die Rheologie der fertigen Schokolade und des Geschmacks 3 Stunden Conchierzeit mindestens erforderlich sind und meistens bis zu 6 oder 8 Stunden conchiert wird, kann mit dem erfindungsgemäßen Verfahren aufgrund der günstigeren Grobstruktur der zu conchierenden Masse eine Zeit von 90 min ausreichend sein. Diese günstigere Grobstruktur wird insbesondere auch durch die oben beschriebenen niedrigen Fettgehalte während des Conchierens bedingt.

Da im Gegensatz hierzu bei den bisher bekannten Verfahren die feinen Partikel von Zucker, Milchpulver und Kakaomasse mit dem bereits am Beginn des Conchieren zugesetzten Fett über einen weiten Bereich des Conchierens eine schwere, schollige, zähe Masse bilden, ist für das bisherige Conchieren auch ein Energiebedarf von 90 - 120 kWh je Tonne zu kalkulieren. Dementgegen sind im erfindungsgemäßen Verfahren 50 - 60 kWh je Tonne an Energie ausreichend, wobei auch im erfindungsgemäßen Verfahren das letztlich erreichte Produkt einen Wassergehalt von 0,4 - <0,6 % aufweist.

Eine Vorrichtung zur Durchführung des bisher beschriebenen Verfahrens weist folgende Besonderheiten auf:
Zur Durchführung des erfindungsgemäßen Verfahrens ist vorgesehen, einer Conche eine Feinzerkleinerungsmühle nachzuschalten.

Für die Durchführung der Grobzerkleinerung wird erfindungsgemäß vorgeschlagen, in die Conche wenigstens ein Maschinenelement zu integrieren. Dies hat den Vorteil einer kompakten Maschine.

Als Maschinenelement für die Grobzerkleinerung bieten sich beispielsweise an die Wandung der Conche angesetzte Mischtöpfe an, mit in diesen um radial gerichtete Achsen rotierenden Messern.

Alternativ können auch in das Innere der Conche hineinragende Rotor/Statormühlen an der Wandung der Conche angesetzt werden. Auch bei diesen sind die Rotorachsen im Wesentlichen radial ausgerichtet.

Für die der Conche nachgeschaltete Feinzerkleinerung kann insbesondere auch eine Kugelmühle vorgesehen sein, die insbesondere sehr kostengünstig ist.

Weitere Vorteile und Merkmale der Erfindung ergeben sich aus der nachfolgenden Beschreibung eines Ausführungsbeispieles. Dabei zeigt
- Figur 1: die Prinzipskizze einer Vorrichtung zur Herstellung von Schokola-denmassen;
- Figur 2: die Prinzipsskizze einer alternativen Ausführungsform einer ent-sprechenden Vorrichtung

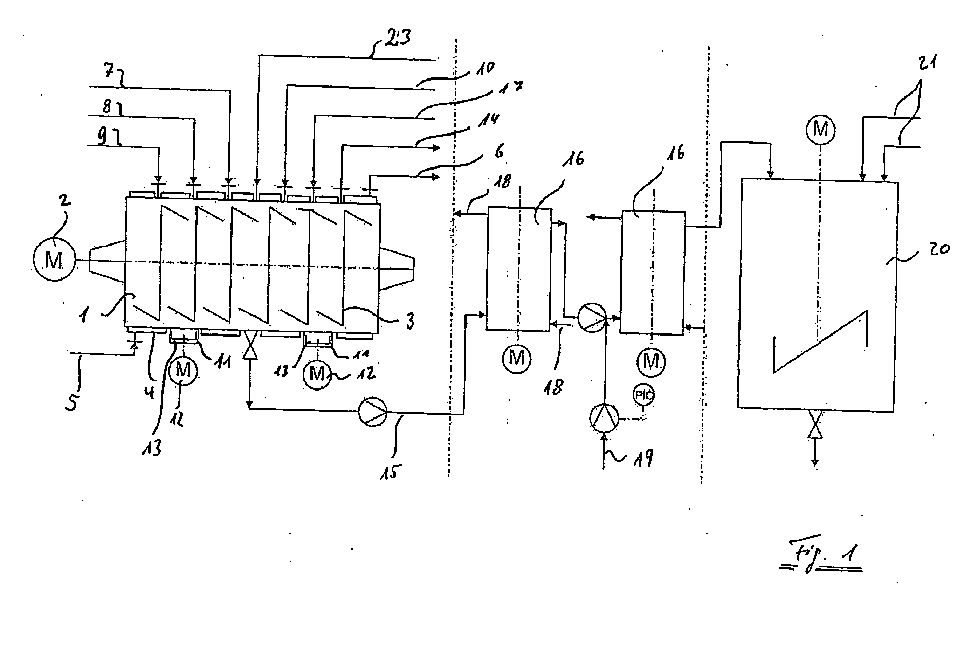

In der Figur 1 erkennt man die Prinzipskizze einer Vorrichtung für die Schokoladenherstellung.

In einer Mischconche 1 wird über einen Motor 2 ein Rührwerk 3 angetrieben. Die Conche ist dabei mit einem Wassermantel umgeben, dem über eine Zuführleitung 5 Wasser zu und über eine Ableitung 6 dieses Wasser wieder abgeführt wird.

Zunächst wird in diese Mischconche Zucker 7 sowie Milchpulver und/oder andere laktosehaltige Milchbestandteile 8 und etwa 1 bis 4 % Fett 9 zugegeben. Ergänzend oder alternativ zu dem Fett 9 kann auch Kakaomasse 10 in die Mischconche 1 zugeführt werden. Der Gesamtfettgehalt darf dabei aber nicht die genannte Grenze von 1 - 4 % überschreiten.

Zunächst wird in der Mischconche das sich aus den oben angeführten Zutaten ergebende Gemenge gemischt und dabei vorzerkleinert auf eine Partikelgröße von etwa x90 300 - 400 µm. Diese Zerkleinerung erfolgt bei der hier dargestellten Mischconche mittels am Umfang der horizontal liegenden Mischconche angeordneten Mischtöpfe 11, in denen über einen Motor 12 angetrieben ein Messer 13 rotiert, das die gewünschte Zerkleinerung bewirkt.

Das dem Gemenge zunächst in einem Umfang von 1 - 4 % beigefügte Fett bewirkt während dieser Zerkleinerung, dass sich keine Stäube bilden, die entweder die Atemwege von Bedienern angreifen könnten oder aber auch eine Explosionsgefahr darstellen. Nach dem hier besprochenen Zerkleinern wird dem Gemenge die restliche für die Endrezeptur vorgesehene Kakaomasse zugesetzt und eventuell auch noch weitere, dem Conchierprozess zu unterziehende Bestandteile.

Während der oben angesprochenen Zerkleinerung und dann auch unmittelbar nach Beginn des sich anschließenden Conchierens der oben genannten Produkte wird über die Zuführleitung 5 Heizwasser durch den Wassermantel 4 der Conche geführt und damit die innerhalb der Conche befindlichen Produkte auf eine Temperatur von ca. 70 bis 80 °C bei Milchschokolade erhöht. - Sollte eine dunkle Schokolade hergestellt werden, die kaum Milchpulver und damit kaum Milchbestandteile enthält, wird diese Temperatur auf etwa 80 bis 95 °C eingestellt. Es ist zwar möglich, das Beheizen der Conche auch erst später auf den Beginn des eigentlichen Conchiervorgangs zu legen. Allerdings bewirkt dies eine eigentlich unerwünschte Verzögerung.

Der wie oben beschrieben relativ grob zerkleinerte und mit der gesamten rezepturbedingten Kakaomasse etc. ergänzte Concheninhalt wird für etwa 90 min. conchiert, wobei die oben genannte Temperatur innerhalb der Conche beibehalten wird. Wenn aufgrund der in die Conche auftretenden Friktion zu viel Energie eingetragen wird und die Temperatur des Concheninhalts über die oben genannten Bereiche anzusteigen droht; wird die Mischconche 1 über die Zuführleitung 5 und die Ableitung 6 mit Kühlwasser auf der gewünschten Temperatur gehalten. Auch durch eine Erhöhung der Menge an zugeführter Luft 23 kann das Halten der voreingestellten Temperatur unterstützt werden.

Nach Abschluss des Conchiervorganges wird der conchierten Masse noch weiteres Fett 10 und Emulgatoren 17 zugeführt. Dieses zusätzliche Material wird noch untergerührt, bevor das zunächst grob zerkleinerte und danach conchierte Material, das durch die genannten Zusätze pumpfähig ist, über eine Pumpleitung 15 einer Rührwerkskugelmühle 16 zugeführt wird.

In dieser Rührwerkskugelmühle wird das conchierte Material auf eine gewünschte Endfeinheit von etwa x90 <15 bis <30 µm zerkleinert. Über Kühlwasserleitungen 18 wird dabei ein zu hoher Temperaturanstieg innerhalb der Rührwerkskugelmühlen verhindert. Wird nur eine Rührwerkskugelmühle benutzt, muss zusätzliches Fett 19 in diese hineindosiert werden, um die Masse trotz des zerkleinerungsbedingten Viskositätsanstiegs pumpfähig zu erhalten. Werden allerdings wie in Fig. 1 dargestellt mehrere, insbesondere zwei Rührwerkskugelmühlen in einer Kaskade hintereinander benutzt, kann das Fett 19 auch zwischen den Rührwerkskugelmühlen 16 der zu zerkleinernden Masse zudosiert werden.

Die Menge an weiterem Fett 19, das zugeführt und untergemischt wird, bevor die Schokoladenmasse dann in einen Rührtank 20 eingefüllt wird, wo die letzten für die Schokoladenrezeptur noch notwendigen Zutaten wie beispielsweise weiteres Fett oder weitere Emulgatoren 21 zugesetzt werden, bestimmt sich im Wesentlichen je nach gewünschter Schokoladenrezeptur.

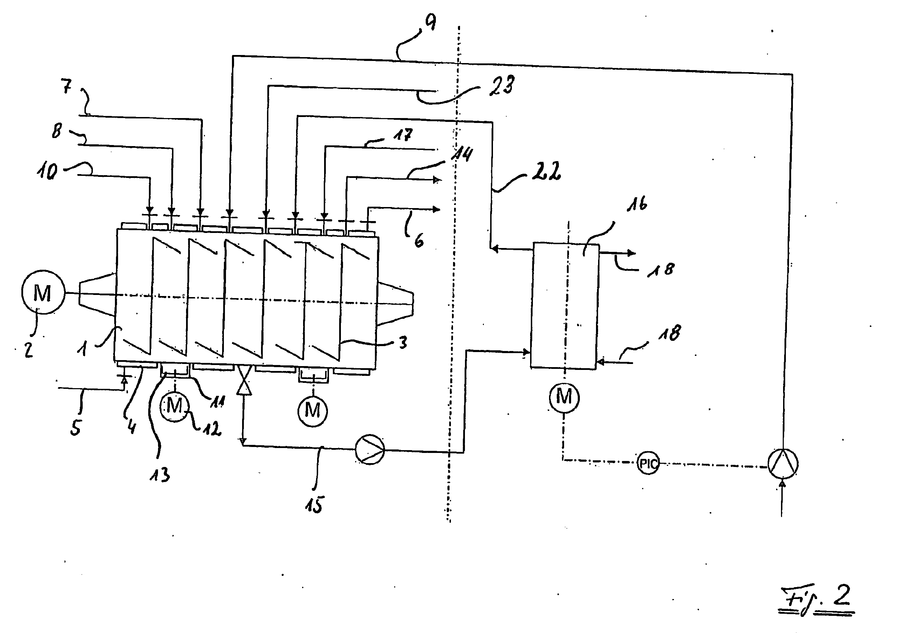

In der Figur 2 ist eine alternative Ausführungsform einer Mischvorrichtung dargestellt. Bei dieser sind grundsätzlich gleiche Elementen mit gleichen Bezugszeichen versehen.

Im Wesentlichen unterscheidet sich die Vorrichtung gemäß Figur 2 dadurch von der Vorrichtung der Figur 1, dass hier vorgesehen ist, die von der durch die Pumpleitungen 15 geführte conchierte Masse nach der Zerkleinerung in der Rührwerkskugelmühle 16 durch eine Rückführleitung 22 in die Mischconche 1 zurückzuleiten. Hierdurch kann ggf. auch eine Zwischenzerkleinerung und Nachconchierung vorgenommen werden.

## Patentansprüche

1. Verfahren zur Herstellung einer Schokoladenmasse mit dem Schritt einer Zerkleinerung von Bestandteilen sowie dem Schritt eines Conchierens, wobei der Schritt der Zerkleinerung dem Schritt des Conchierens nachgeschaltet ist und wobei dem Conchieren eine Grobzerkleinerung vorgeschaltet ist und die Zerkleinerung nach dem Conchieren eine Feinzerkleinerung ist, wobei der besagten Grobzerkleinerung Kristallzucker, Milchpulver sowie Fett oder Kakaomasse unterzogen werden,
**dadurch gekennzeichnet,**
**dass** die Grobzerkleinerung mit in die Conche integrierten Maschinenelementen erfolgt bei einem Fettanteil von 1 bis 4 %.

2. Verfahren gemäß Anspruch 1,
**dadurch gekennzeichnet,**
**dass** nach der Grobzerkleinerung sämtliche Kakaomasse zugegeben wird sowie alle weiteren Bestandteil, die dem Conchieren zu unterziehen sind.

3. Verfahren gemäß Anspruch 1,
**dadurch gekennzeichnet,**
**dass** beim Conchieren eine Kühlung erst ab Temperaturen von ca. 70 bis 80 °C oder aber von 80 bis 95 °C erfolgt.

4. Verfahren gemäß Anspruch 1,
**dadurch gekennzeichnet,**
**dass** nach dem Conchieren vor der Feinzerkleinerung der Fettanteil von max. 15 bis 16 % weiter angehoben wird und dass die Feinzerkleinerung in einer Rührwerkskugelmühle erfolgt.

## Claims

1. A method of producing a chocolate mass with the step of comminuting components and the step of conching, wherein the comminution step is after the conching step and wherein a course comminution occurs before the conching and the comminution after the conching is a fine comminution, wherein granulated sugar, milk powder and fat or cocoa mass is added to the said coarse comminution,
**characterised in that**
the coarse comminution is effected with machine elements integrated into the conch with a fat content of 1 to 4 %.

2. A method as claimed in claim 1,
**characterised in that**
after the coarse comminution all the cocoa mass is added and all the further components, which are to be subjected to the conching.

3. A method as claimed in claim 1,
**characterised in that**
during the conching process cooling is effected only from temperatures from ca. 70 to 80 °C or from 80 to 95 °C.

4. A method as claimed in claim 1,
**characterised in that**
after the conching and before the fine comminution the fat content is further increased from a maximum of 15 to 16 % and that the fine comminution is effected in a ball mill agitator.

## Revendications

1. Procédé de fabrication d'une pâte de chocolat, comprenant l'étape consistant à broyer des composants ainsi que l'étape de conchage, sachant que l'étape de broyage suit l'étape de conchage, et sachant que le conchage est précédé d'un broyage grossier et le broyage après le conchage est un broyage fin, sachant que du sucre cristallisé, du lait en poudre ainsi que des matières grasses ou de la pâte de cacao sont soumis audit broyage grossier,
**caractérisé en ce que**
le broyage grossier s'effectue avec des éléments mécaniques intégrés dans la conche avec une teneur en matières grasses de 1 à 4 %.

2. Procédé selon la revendication 1,
**caractérisé en ce**
**qu'**après le broyage grossier, on ajoute la totalité de la pâte de cacao ainsi que tous les autres composants qui doivent être soumis au conchage.

3. Procédé selon la revendication 1,
**caractérisé en ce que**,
lors du conchage, on n'effectue un refroidissement qu'à partir de températures d'environ 70 à 80 °C, ou bien de 80 à 95 °C.

4. Procédé selon la revendication 1,
**caractérisé en ce**
**qu'**après le conchage et avant le broyage fin, la teneur en matières grasses est augmentée de 15 à 16 % au maximum, et en ce que le broyage fin s'effectue dans un broyeur-agitateur à boulets.
